# EUROPEAN PATENT SPECIFICATION

(11) **EP 3 428 997 B1**
(45) Date of publication and mention of the grant of the patent: **22.01.2020**
(21) Application number: 18176716.1
(22) Date of filing: 08.06.2018
(51) Int. Cl.: H01M 2/20, H01M 2/10

(54) **BATTERY PACK**
BATTERIEPACK
BLOC-BATTERIE

(30) Priority: 12.07.2017 JP 2017136114
(43) Date of publication of application: 16.01.2019
(73) Proprietor: TOYOTA JIDOSHA KABUSHIKI KAISHA, Toyota-shi, Aichi 471 8571 (JP)
(72) Inventor: YAMANAKA, Atsushi, Toyota-shi, Aichi 471-8571 (JP); SUZUKI, Yusuke, Toyota-shi, Aichi 471-8571 (JP); TSUCHIYA, Takenori, Toyota-shi, Aichi 471-8571 (JP)
(74) Representative: TBK

(56) References cited:
- EP-A1- 3 166 158
- WO-A1-2013/083221
- US-A1- 2012 183 838

## Description

### BACKGROUND OF THE INVENTION

### 1. Field of the Invention

The disclosure relates to a battery pack and, more specifically, relates to a battery pack including a bus bar electrically connecting a plurality of cells to each other.

### 2. Description of Related Art

In recent years, electrically driven vehicles equipped with battery packs, such as hybrid vehicles and electric vehicles, have been spreading. Generally, an in-vehicle battery pack includes several ten to several hundred cells. These cells are coupled and electrically connected to each other via bus bars each being a conductor that allows a large current to flow through.

During the charge/discharge of the battery pack, heat loss (Joule heat) is generated in the bus bars. In view of this, a technique has been proposed that suppresses the heat loss in the bus bars to thereby enhance the charge/discharge efficiency of the battery pack. For example, Japanese Unexamined Patent Application Publication JP 2011-065794 A discloses a technique that suppresses heat loss by equalizing the current flowing through a battery pack using bus bars.

### SUMMARY OF THE INVENTION

The configuration of a battery pack is known that includes first and second modules each including a plurality of cells, and bus bars (see, e.g. JP 2011-065794 A). The bus bars connect the cells included in the first module in parallel to each other, the cells included in the second module in parallel to each other, and the first module and the second module in series to each other. In this way, since the cells are connected in parallel in each module, the amount of current that can be charged/discharged by the battery pack can be increased compared to a case where all the cells are connected in series. However, at the same time, with the increase in charge/discharge current, heat loss in the bus bars may also be increased.

As a technique for suppressing heat loss in the bus bars, it may be suggested to increase the size of the bus bars, for example. However, the increase in the size of the bus bars may increase the weight of the battery pack. Then, in the case of, for example, an in-vehicle battery pack, there is a possibility that the distance that an electrically driven vehicle can travel without consuming fuel (so-called EV travel distance) is shortened. Alternatively, there is a possibility that the fuel consumption of a hybrid vehicle is deteriorated.

Document WO 2013/083221 A1 discloses a battery pack according to the preamble of claim 1. Specifically, it is disclosed to provide a connecting element for electrically connecting at least two battery cells of a battery, which cells are electrically connected in parallel. A base of the connecting element can be coupled to like poles of the battery cells, which are electrically connected in parallel, via contact points. When the battery is operated, the electric currents of the at least two battery cells that are electrically connected in parallel flow via a collection section of the connecting element. The connecting element has a conductor cross-section that increases towards the collection section.

Document EP 3 166 158 A1 discloses a rechargeable battery module which includes: a plurality of unit cells arranged along a first direction; a bus bar holder on the unit cells; a bus bar in the bus bar holder electrically connecting the unit cells; first and second end plates on opposite ends of the unit cells in the first direction; and a side plate on opposite ends of the unit cells in a second direction intersecting the first direction and connected to the end plates, wherein the bus bar comprises a first member extending in the first direction and connected to electrode terminals of the unit cells, and a second member connected to the first member.

It is an object of the invention to provide a battery pack allowing to improve a reliability of a battery pack.

Furthermore, it is an object of the invention to provide a battery pack including a bus bar that reduces heat loss in the bus bar due to charge/discharge of the battery pack while suppressing an increase in the weight of the battery pack.

These objects are achieved by a batter pack according to claim 1.

Advantageous further developments are as set forth in the dependent claims.

Heat loss in the bus bar is given by the product of the square of a current flowing in the bus bar and a resistance of the bus bar. Therefore, the heat loss tends to be greater in the region where a higher current flows. On the other hand, since the resistance of the bus bar is inversely proportional to the cross-sectional area of the region, the resistance of the bus bar is reduced by increasing the cross-sectional area of the bus bar. Accordingly, it is possible to reduce the heat loss in the bus bar by increasing the cross-sectional area.

It may be suggested to reduce the heat loss by uniformly increasing the cross-sectional area of the bus bar. However, in that case, since the cross-sectional areas of the first region and the second region where only relatively small current flows also increase, there is a possibility that the weight of the battery pack increases excessively (details will be described later). On the other hand, according to the configuration described above, the cross-sectional area of the intermediate region where a high current flows so that heat loss tends to be large is selectively increased, and the cross-sectional areas of the first region and the second region are made smaller than the cross-sectional area of the intermediate region. Consequently, it is possible to effectively reduce the heat loss in the intermediate region while suppressing an increase in the weight of the first region and the second region.

According to the disclosure, in a battery pack including a bus bar electrically connecting a plurality of cells to each other, heat loss in the bus bar due to charge/discharge of the battery pack can be reduced while suppressing an increase in the weight of the bus bar.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically showing the overall configuration of a vehicle equipped with a battery pack according to a first embodiment;
FIG. 2 is a diagram showing the configuration of a cell;
FIG. 3 is a top view of the battery pack shown in FIG. 1;
FIG. 4 is a diagram for explaining the configuration of a bus bar in a related art of the first embodiment;
FIG. 5 is a diagram for explaining the configuration of a bus bar according to a first example useful for understanding the invention;
FIG. 6 is a diagram for explaining the configuration of a bus bar in a first embodiment;
FIG. 7 is a top view of a battery pack according to a first modification of the first embodiment;
FIG. 8 is a diagram for explaining the configuration of bus bars in the second example useful for understanding the invention;
FIG. 9 is a diagram for explaining the configuration of bus bars in a second example useful for understanding the invention; and
FIG. 10 is a diagram for explaining the configuration of bus bars in a modification of the second example useful for understanding the invention.

### DETAILED DESCRIPTION OF EMBODIMENTS

Hereinafter, examples useful for understanding the invention and embodiments of the disclosure will be described in detail with reference to the drawings. The same reference symbols will be assigned to the same or corresponding portions in the figures, and a description thereof will not be repeated.

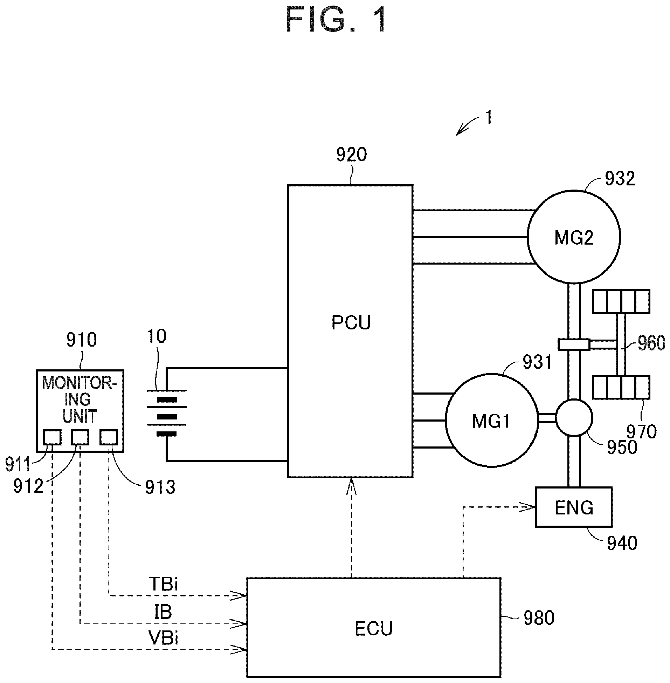

The first embodiment of the disclosure will be described. First, the overall configuration of an electrically driven vehicle will be described. FIG. 1 is a diagram schematically showing the overall configuration of a vehicle 1 equipped with a battery pack 10 according to the first embodiment. Although a description will typically be given of a case where the vehicle 1 is a hybrid vehicle, a battery pack according to the disclosure is applicable to not only hybrid vehicles but also other vehicles that are respectively equipped with battery packs for travel. The battery pack 10 according to the first embodiment may alternatively be used for another purpose (e.g. for stationary use).

Referring to FIG. 1, the vehicle 1 includes the battery pack 10, a monitoring unit 910, a power control unit (PCU) 920, motor generators 931, 932, an engine 940, a power split device 950, a drive shaft 960, drive wheels 970, and an electronic control unit (ECU) 980.

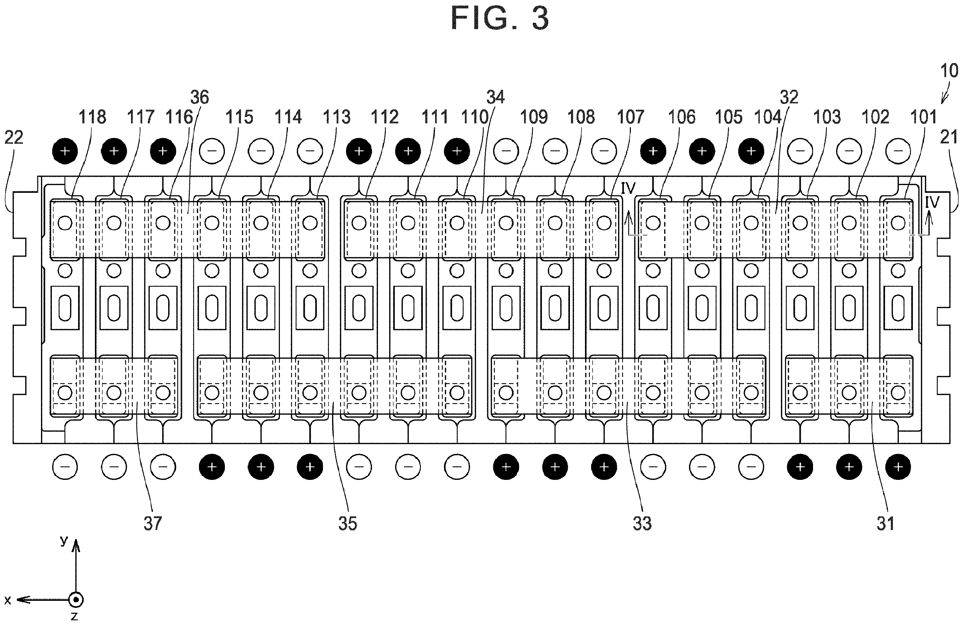

The battery pack 10 includes a plurality of cells. The number of cells is, for example, 288, and the 288 cells are connected in a 96-series × 3-parallel configuration. However, in the first embodiment, in order to prevent the drawing from becoming complicated, a description will be given of an example in which 18 cells 101 to 118 are connected in a 6-series × 3-parallel configuration (see FIG. 3).

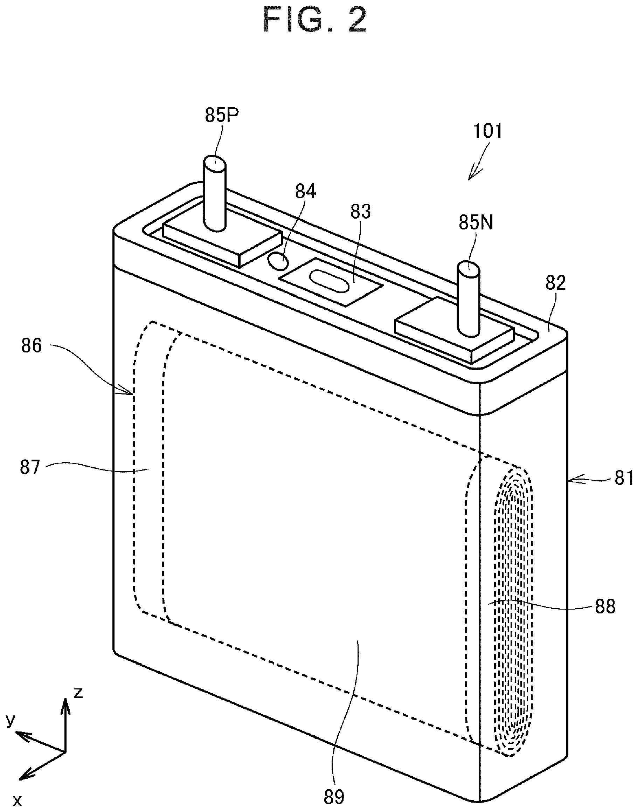

Each of the cells 101 to 118 is a secondary battery and, in the first embodiment, is a lithium-ion secondary battery. However, the type of secondary battery is not particularly limited, and the cells 101 to 118 may each be another secondary battery such as a nickel-hydrogen secondary battery. Further, the number of cells described above is only by way of example, and the number of cells is not particularly limited as long as it is four or more (i.e. 2-series × 2-parallel or more). Detailed configurations of the battery pack 10 and the cells 101 to 118 will be described with reference to FIGS. 2 to 5.

The battery pack 10 stores electric power for driving the motor generators 931, 932 and supplies electric power to the motor generators 931, 932 via the PCU 920. The battery pack 10 is charged by receiving generated electric power from the motor generators 931, 932 via the PCU 920.

The monitoring unit 910 includes a voltage sensor 911, a current sensor 912, and a temperature sensor 913. The voltage sensor 911 detects voltages VBi (i = 1 to 18) of the cells 101 to 118 included in the battery pack 10. The current sensor 912 detects a current IB that is input to or output from the battery pack 10. The temperature sensor 913 detects temperatures TBi of the cells 101 to 118.

The PCU 920 performs bidirectional power conversion between the battery pack 10 and the motor generators 931, 932 according to a control signal from the ECU 980. The PCU 920 is configured to be able to control the states of the motor generators 931, 932 independently of each other. For example, the PCU 920 can control the motor generator 932 to a power running state while controlling the motor generator 931 to a regenerative state (power generation state). The PCU 920 includes, for example, two inverters (not shown) that are provided respectively corresponding to the motor generators 931, 932, and converters (not shown) that each boost a direct-current voltage, to be supplied to the corresponding inverter, to an output voltage of the battery pack 10 or higher.

Each of the motor generators 931, 932 is an alternating-current rotary electric machine and is, for example, a three-phase alternating-current synchronous electric motor having a rotor embedded with permanent magnets. The motor generator 931 is mainly used as a power generator that is driven by the engine 940 via the power split device 950. Electric power generated by the motor generator 931 is supplied to the motor generator 932 or the battery pack 10 via the PCU 920. The motor generator 932 mainly operates as an electric motor to drive the drive wheels 970. The motor generator 932 is driven by receiving at least one of electric power from the battery pack 10 and electric power generated by the motor generator 931, and driving force of the motor generator 932 is transmitted to the drive shaft 960. On the other hand, the motor generator 932 operates as a power generator to perform regenerative power generation during braking of the vehicle 1 or during reduction in acceleration of the vehicle 1 on a downward slope. Electric power generated by the motor generator 932 is supplied to the battery pack 10 via the PCU 920.

The engine 940 is an internal combustion engine that outputs power by converting combustion energy generated by combustion of an air-fuel mixture into kinetic energy of moving elements such as pistons or rotors.

The power split device 950 includes, for example, a planetary gear mechanism (not shown) having three rotary shafts of a sun gear, a carrier, and a ring gear. The power split device 950 splits power output from the engine 940 into power for driving the motor generator 931 and power for driving the drive wheels 970.

The ECU 980 includes a central processing unit (CPU) (not shown), a memory (not shown), and input/output ports (not shown) for inputting and outputting various signals. The ECU 980 controls the engine 940 and the PCU 920 based on signals received from the sensors, and programs and maps stored in the memory.

Next, the configuration of the cells 101 to 118 of the battery pack 10 will be described. Since the cells 101 to 118 all have the same configuration, the configuration of the cell 101 will typically be described below.

FIG. 2 is a diagram showing the configuration of the cell 101. Referring to FIG. 2, the cell 101 includes a case body 81 having a rectangular box shape (generally rectangular parallelepiped shape) formed with an opening that is open in one direction, and a lid 82 closing the opening of the case body 81. The case body 81 and the lid 82 are made of a metal material such as aluminum and are welded to each other.

Hereinafter, the short-side direction (thickness direction) of the cell 101 will be referred to as an "x-direction", the long-side direction (length direction) of the cell 101 as a "y-direction", and the height direction of the cell 101 as a "z-direction". For example, the vertical direction is the negative z-direction, and the horizontal direction is the xy-plane direction.

The lid 82 is provided with an explosion-proof valve 83 and an injection plug 84. The explosion-proof valve 83 operates when the internal pressure of the cell 101 increases to reach a predetermined pressure, thereby preventing rupture of the cell 101. The injection plug 84 is used for injecting an electrolyte solution into the cell 101.

The cell 101 further includes a positive electrode terminal 85P and a negative electrode terminal 85N that are provided to the lid 82. The positive electrode terminal 85P and the negative electrode terminal 85N are disposed at an interval in the long-side direction (y-direction) of the case body 81. One end of each of the positive electrode terminal 85P and the negative electrode terminal 85N is disposed so as to protrude upward (positive z-direction) from the lid 82. The positive electrode terminal 85P and the negative electrode terminal 85N are each configured such that it can be fastened to a positive electrode terminal or a negative electrode terminal of another cell adjacent to the cell 101 (of the cell 102 in later-described FIG. 3) using nuts and a bus bar.

An electrode body 86 and an electrolyte solution (not shown) are housed in the case body 81. In FIG. 2, the electrode body 86 is shown in broken lines by seeing through the case body 81. The electrode body 86 is formed by laminating a positive electrode 87 and a negative electrode 88 with a separator 89 interposed therebetween to obtain a laminate and then winding the laminate. The electrolyte solution is retained by the positive electrode 87, the negative electrode 88, the separator 89, and the like. As the positive electrode 87, the negative electrode 88, the separator 89, and the electrolyte solution, it is possible to use configurations and materials that are conventionally known as a positive electrode, a negative electrode, a separator, and an electrolyte solution of a lithium-ion secondary battery.

Next, the configuration of the battery pack 10 will be described. FIG. 3 is a top view of the battery pack 10 shown in FIG. 1. In FIG. 3, a stacked body formed by stacking the 18 cells 101 to 118 in the short-side direction (x-direction) of the cells is shown as the battery pack 10.

The battery pack 10 further includes a pair of end plates 21, 22 and bus bars 31 to 37. The end plates 21, 22 are disposed so as to respectively face one end and the other end of the battery pack 10 in its stacking direction (x-direction). The end plates 21, 22 are restrained by restraining bands (not shown) in a state where all the cells 101 to 118 are sandwiched therebetween. The bus bars 31 to 37 are each a conductor made of, for example, copper, brass, or aluminum and each couple and electrically connect the adjacent cells to each other.

The battery pack 10 according to a first example useful for understanding the invention has a feature in the configuration of the bus bars 31 to 37. In order to facilitate understanding of this feature, the configuration of a battery pack according to a related art will first be described below. The configuration of the battery pack according to the related art differs from the configuration of the battery pack 10 in including bus bars 31X to 37X instead of the bus bars 31 to 37. The other configuration of the battery pack according to the related art is the same as the corresponding configuration of the battery pack 10.

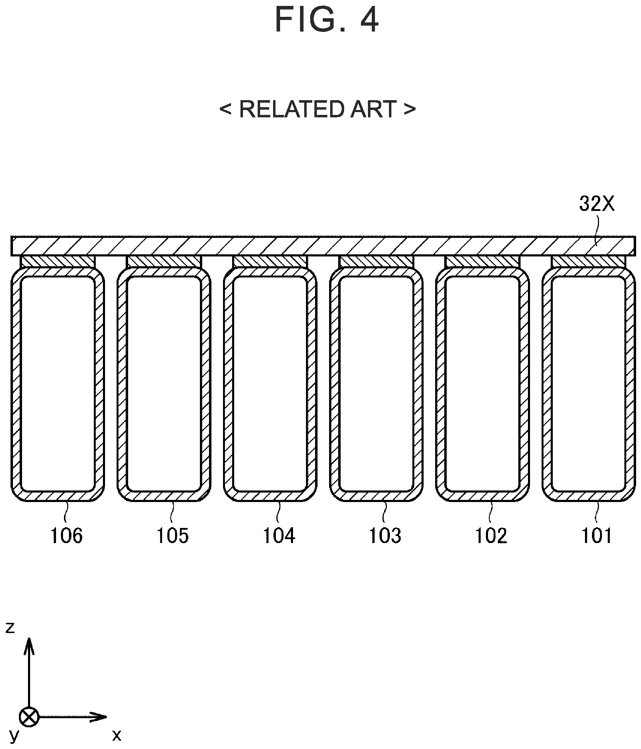

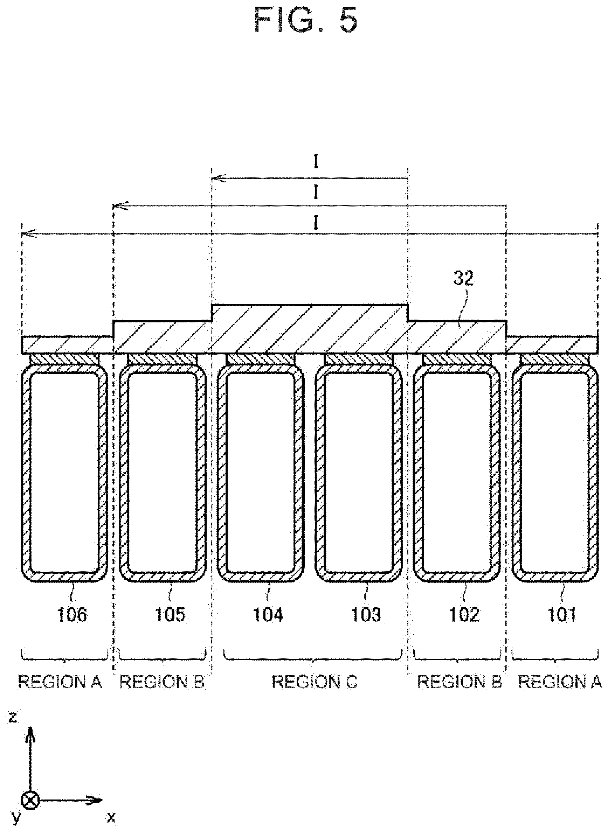

Next, the bus bars in the related art will be described. FIG. 4 is a diagram for explaining the configuration of the bus bar 32X in the related art. FIG. 4 and later-described FIG. 5 each show a sectional view taken along line IV-IV of FIG. 3. However, illustration of the inside (electrode body etc.) of each cell is omitted.

Referring to FIGS. 3 and 4, the positive electrodes (positive electrode is indicated by + in FIG. 3) of the cells 101 to 103 are coupled and electrically connected to each other via the bus bar 31X. That is, the cells 101 to 103 are connected in parallel. The negative electrodes (negative electrode is indicated by - in FIG. 3) of the cells 101 to 103 and the positive electrodes of the cells 104 to 106 are coupled and electrically connected to each other via the bus bar 32X. Consequently, the cells 101 to 103 are connected in parallel, the cells 104 to 106 are connected in parallel, and the cells 101 to 103 connected in parallel and the cells 104 to 106 connected in parallel are connected in series. The cells 101 to 103 correspond to cells included in a "first module" according to the disclosure, and the cells 104 to 106 correspond to cells included in a "second module" according to the disclosure.

While a detailed description will not be repeated, the connection relationship between the other cells 107 to 118 and the other bus bars 33X to 37X is the same as described above. By connecting a plurality of cells (three cells in FIG. 3) in parallel as described above, it is possible to increase the amount of current that can be charged/discharged by the battery pack.

However, at the same time, with the increase in charge/discharge current, heat loss in the bus bars 31X to 37X may also be increased. As a technique for suppressing heat loss in the bus bars 31X to 37X, it may be suggested to increase the size (e.g. the thickness) of the bus bars 31X to 37X, for example. However, the increase in the size of the bus bars 31X to 37X may increase the weight of the battery pack. As a result, there is a possibility that the EV travel distance of the vehicle 1 is shortened or that the fuel consumption of the vehicle 1 is deteriorated. In view of this, in the first example useful for understanding the invention and the first embodiment, the configuration is employed where the cross-sectional area of the bus bar is greater in the region in which a higher current flows.

The bus bars in the first example useful for understanding the inventionwill be described. FIG. 5 is a diagram for explaining the configuration of the bus bar 32 in the first example useful for understanding the invention. Referring to FIGS. 3 and 5, in order to facilitate understanding, a description will be given of a case where charge/discharge currents that flow through the cells 101 to 106 are equal to each other and are each indicated by I. End regions of the bus bar 32 in the stacking direction (x-direction) of the cells 101 to 106 will each be referred to as a "region A", a middle region in the stacking direction as a "region C", and a region located between each region A and the region C as a "region B". One or both of the regions A, B on one side correspond to a "first region" according to the disclosure, one or both of the regions A, B on the other side correspond to a "second region" according to the disclosure, and the region C corresponds to an "intermediate region" according to the disclosure.

In the bus bar 32 in the first example useful for understanding the invention, the cross-sectional area of the region C is the greatest, the cross-sectional area of the region B is the second greatest, and the cross-sectional area of the region A is the least. In other words, the bus bar 32 is provided such that the cross-sectional area of the middle region (region C) in the stacking direction of the cells 101 to 106 is the greatest, while the cross-sectional area decreases as approaching the end regions in the stacking direction. The reason will be described below.

Heat loss in each of the regions A to C is given by the product of the square of a current flowing in the region and a resistance in the region. The current that flows in the region A is I. The current that flows in the region B is 2I because the current that flows in the region A joins. The current that flows in the region C is 3I because the current that flows in the region A joins and further the current that flows in the region B joins. In this way, the current that flows in the bus bar 32 increases in the region that is closer to the region C.

The resistance of each of the regions A to C is inversely proportional to the cross-sectional area of the region. In the case where the thickness of the bus bar 32X is uniform as in the related art (see FIG. 4), the cross-sectional areas of all the regions A to C (not shown in FIG. 4) are equal to each other, and therefore, the resistances of all the regions A to C are also equal to each other. Accordingly, in the related art, heat loss in the region C is the greatest in the bus bar 32X.

In the first example useful for understanding the invention, the cross-sectional area of the region A is S1. The cross-sectional area of the region B is S2 that is greater than S1 (S1 < S2). The cross-sectional area of the region C is S3 that is further greater than S2 (S1 < S2 < S3). In this way, since the cross-sectional area is greater in the region that is closer to the middle region C, the resistance of the region C is the least. That is, since the resistance of the region C where the highest charge/discharge current flows is the least, it is possible to effectively reduce heat loss in the region C.

When the bus bar has the uniform thickness as in the related art, it may be suggested to reduce heat loss by uniformly increasing the thickness of the bus bar. However, in that case, since the thickness of the bus bar increases even in the region A (and the region B) where only relatively small current flows, there is a possibility that the weight of the battery pack increases excessively. Then, there is a possibility that the fuel consumption of the vehicle 1 is deteriorated (or a possibility that the EV travel distance is shortened). On the other hand, according to the first example useful for understanding the invention, heat loss due to charge/discharge of the battery pack 10 can be effectively reduced in the region C while suppressing a weight increase in the regions A, B.

In the example shown in FIG. 5, the cross-sectional area changes stepwise (discontinuously) between the region A and the region B, and further, the cross-sectional area changes stepwise also between the region B and the region C. However, the manner of change in cross-sectional area between the regions is not limited to this, and the cross-sectional area of the regions A to C may continuously change along the stacking direction of the cells 101 to 106.

In the first example useful for understanding the invention, the description has been given of the example in which the bus bar 32 extends in a straight line as shown in FIGS. 3 and 5. In FIGS. 3 and 5, the x-direction corresponds to a "predetermined direction" in the disclosure. However, the direction in which the bus bar 32 extends is not limited to the straight line, and, for example, it may be a shape composed of a plurality of straight lines (stepped shape or the like), may be a curved line, or may be a shape formed by a combination of straight and curved lines. In such a case, the "predetermined direction" differs depending on a region of a bus bar.

Next, a first embodiment will be described. In the first example useful for understanding the invention, the description has been given of the example in which the bus bar 32 is configured as a single member (see FIG. 5). However, according to the invention, a bus bar is composed of a plurality of bus bar plates.

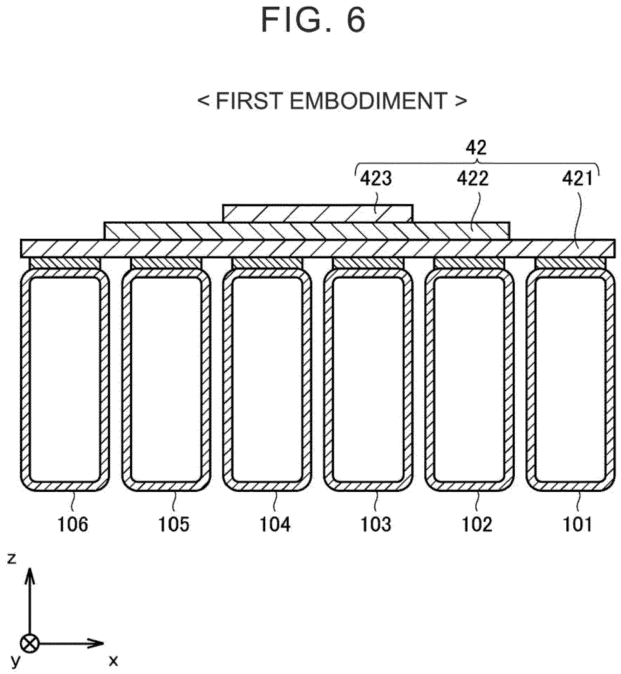

FIG. 6 is a diagram for explaining the configuration of a bus bar 42 in the first embodiment. Referring to FIG. 6, a battery pack according to the first embodiment differs from the battery pack 10 according to the first example useful for understanding the invention in including the bus bar 42 (three bus bar plates 421 to 423) instead of the bus bar 32.

The bus bar plate 421 is disposed in regions (regions A to C in FIG. 5) corresponding to the cells 101 to 106 and is coupled to the cells 101 to 106. The bus bar plate 422 is disposed on the bus bar plate 421 in regions (regions B, C in FIG. 5) corresponding to the cells 102 to 105 and is coupled to the cells 102 to 105. The bus bar plate 423 is disposed on the bus bar plate 422 in a region (region C in FIG. 5) corresponding to the cells 103, 104 and is coupled to the cells 103, 104.

Also in the first embodiment, like in the first example useful for understanding the invention, the bus bar 42 is provided such that the cross-sectional area of the middle region (region C) in the stacking direction is the greatest, while the cross-sectional area decreases as approaching the end regions (regions A) in the stacking direction. Therefore, also in the first embodiment, heat loss due to charge/discharge of the battery pack can be reduced while suppressing an increase in the weight of the battery pack.

Generally, there is a possibility of occurrence of height error (unevenness) of a battery pack due to manufacturing tolerance (dimensional error) of cells or error in assembly (assembly error) of cells. According to the first embodiment, since the bus bar 42 is composed of individual conductors (bus bar plates 421 to 423), the bus bar plates 421 to 423 each have flexibility to slightly bend in its thickness direction (height direction of the battery pack). Therefore, when the bus bar plates 421 to 423 are attached in turn to the cells 101 to 106, error in the height direction of the battery pack is absorbed. As a result, it is possible to improve the reliability of the battery pack.

Conversely, when the bus bar 32 is composed of the single member as in the first example useful for understanding the invention, the rigidity is enhanced compared to the case where the bus bar 42 is composed of the individual conductors. Therefore, although the error cannot be absorbed differently from the first embodiment, the number of components can be reduced. Accordingly, it is possible to reduce the manufacturing cost of the battery pack by reducing the number of assembly steps thereof.

Next, a first modification of the first embodiment will be described. In the first example useful for understanding the invention and the first embodiment, the description has been given of the example in which all the cells 101 to 106 are coupled to each other by the single bus bar 32 (or the single bus bar 42). The bus bar 32, 42 thus configured will also be referred to as an "integrated bus bar" in this specification. In contrast, a "divided bus bar" configured to couple only adjacent two of the cells to each other may alternatively be employed. In the first modification of the first embodiment, the configuration in which the divided bus bar is employed will be described.

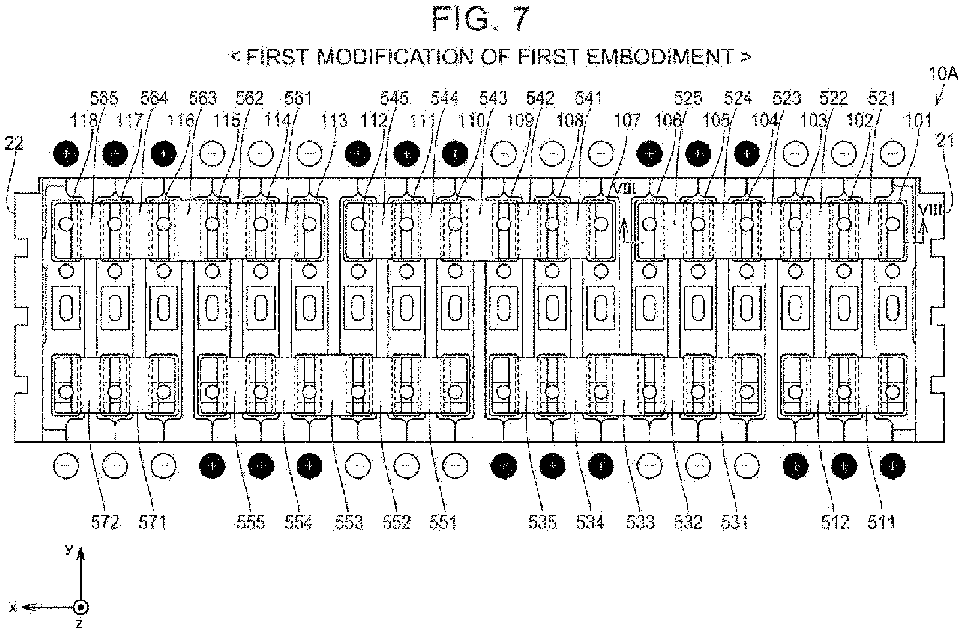

FIG. 7 is a top view of a battery pack 10A according to the first modification of the first embodiment. Referring to FIG. 7, the battery pack 10A differs from the battery pack 10 according to the first example useful for understanding the invention (see FIGS. 3 and 5) and the first embodiment in including bus bars 511 to 572 instead of the bus bars 31 to 37.

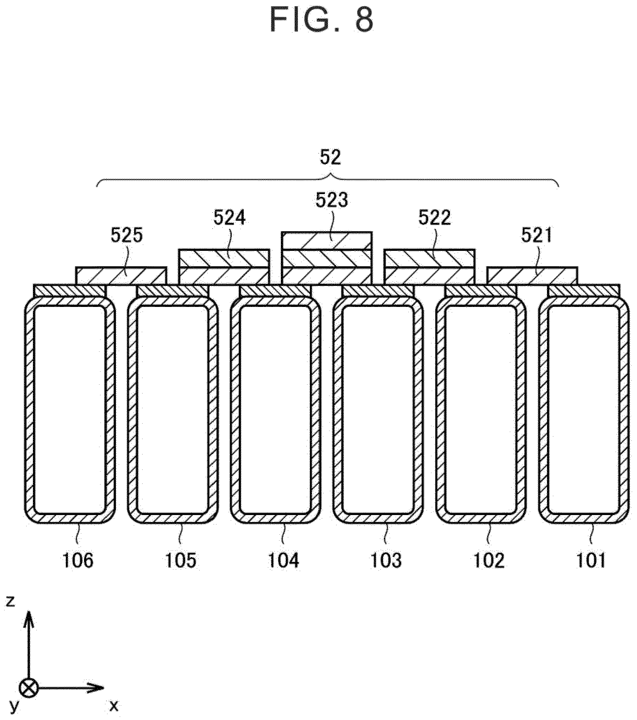

FIG. 8 is a diagram for explaining the configuration of the bus bars 521 to 525 in the first modification of the first embodiment. FIG. 8 shows a sectional view of the battery pack 10A taken along line VIII-VIII of FIG. 7.

The bus bar 521 couples the negative electrode terminal of the cell 101 and the negative electrode terminal of the cell 102 to each other. The bus bar 522 couples the negative electrode terminal of the cell 1 02 and the negative electrode terminal of the cell 1 03 to each other. The bus bar 523 couples the negative electrode terminal of the cell 103 and the positive electrode terminal of the cell 104 to each other. The bus bar 524 couples the positive electrode terminal of the cell 1 04 and the positive electrode terminal of the cell 1 05 to each other. The bus bar 525 couples the positive electrode terminal of the cell 105 and the positive electrode terminal of the cell 106 to each other.

The bus bars 521, 525 are each composed of a single bus bar plate. The bus bars 522, 524 are each composed of two bus bar plates stacked in its thickness direction (z-direction). The bus bar 523 is composed of three bus bar plates stacked in its thickness direction.

In this way, like the bus bar 32 in the first example useful for understanding the invention (see FIG. 5), when taken as a whole, the bus bars 521 to 525 are provided such that the cross-sectional area of the middle region (region C in FIG. 5) in the stacking direction is the greatest, while the cross-sectional area decreases as approaching the end regions (regions A) in the stacking direction. Therefore, also in the first modification of the first embodiment, heat loss due to charge/discharge of the battery pack 10A can be reduced while suppressing an increase in the weight of the battery pack 10A.

Since the bus bars 521 to 525 are configured as the divided bus bar, although the structure becomes complicated and the number of assembly steps increases compared to the integrated bus bar (bus bar 32) as in the first example useful for understanding the invention, conductors between the bus bars 521 to 525 can be omitted so that it is possible to further suppress an increase in the weight of the battery pack 10A.

Since the configuration of the other bus bars 531 to 565 is the same as the configuration of the bus bars 521 to 525, a detailed description will not be repeated. Although FIG. 8 shows the example in which each of the bus bars 522 to 524 includes a plurality of bus bar plates, the bus bars 522 to 524 may each be composed of a single member.

Next, the second example useful for understanding the invention of the disclosure will be described. In the first example useful for understanding the invention, the first embodiment and the first modification thereof, the description has been given of the example in which the cross-sectional area of the bus bar is adjusted by changing the thickness of the bus bar (see FIGS. 5, 6, and 8). However, as will be described below, the cross-sectional area of a bus bar may alternatively be adjusted by changing the width of the bus bar.

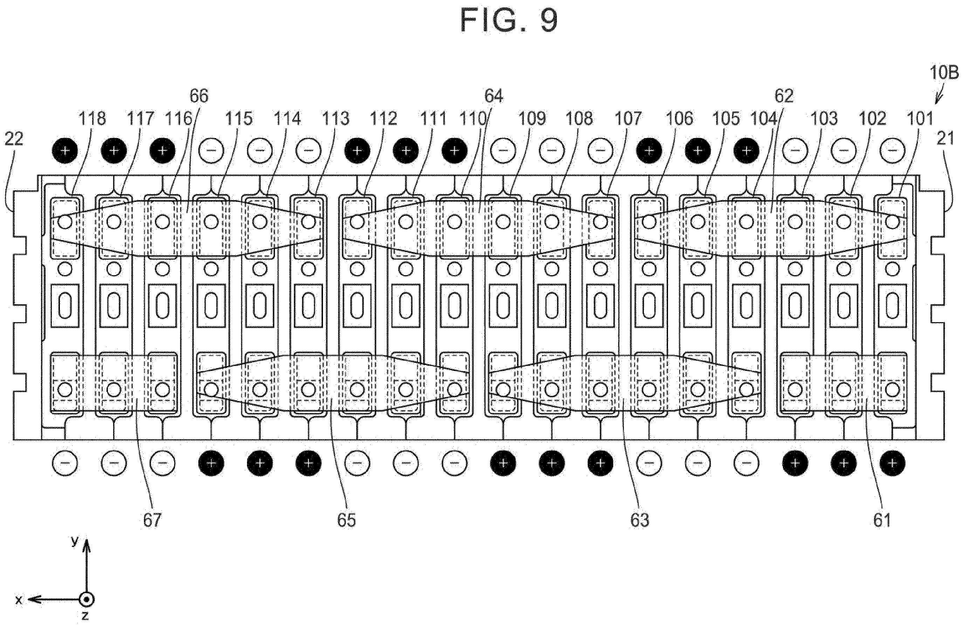

FIG. 9 is a diagram for explaining the configuration of bus bars 61 to 67 in the second example useful for understanding the invention. Referring to FIG. 9, a battery pack 10B differs from the battery pack 10 according to the first example useful for understanding the invention (see FIG. 3) in including the bus bars 62 to 66 instead of the bus bars 32 to 36. The other configuration of the battery pack 10B is the same as the corresponding configuration of the battery pack 10.

The bus bar 62 connects the cells 101 to 103 in parallel to each other and the cells 104 to 106 in parallel to each other and further connects the cells 101 to 103 and the cells 104 to 106 in series to each other. The thickness of the bus bar 62 is uniform. On the other hand, the width (length in the y-direction) of the bus bar 62 is the greatest in its middle region in the stacking direction (x-direction) of the cells 101 to 106, while the width of the bus bar 62 decreases as approaching its end regions in the stacking direction. Consequently, the configuration is realized where, in the bus bar 62, the cross-sectional area of the middle region in the stacking direction of the cells 101 to 106 is the greatest, while the cross-sectional area decreases as approaching the end regions in the stacking direction. Since the configuration of the other bus bars 63 to 66 is basically the same as the configuration of the bus bar 62, a detailed description will not be repeated.

According to the second example useful for understanding the invention, like in the first example useful for understanding the invention, the first embodiment (and the first modification thereof), heat loss due to charge/discharge of the battery pack 10B can be reduced while suppressing an increase in the weight of the battery pack 10B.

Since spaces around the positive electrode terminals 85P and the negative electrode terminals 85N of the cells 101 to 106 (particularly, spaces in the width direction of the bus bar 62) are limited, there is a case where it is difficult to increase the width of the middle region of the bus bar 62 to several times greater than the width of the end regions. In such a case, as described in the first example useful for understanding the invention, the cross-sectional area of the bus bar 32 may be adjusted by changing the thickness of the bus bar 32 (see FIG. 5). On the other hand, when it is possible to sufficiently reduce heat loss by adjusting the cross-sectional area of the bus bar 62 by means of changing its width, the configuration shown in FIG. 9 can be employed. Since the bus bar 62 with the uniform thickness is easy to process and thus high in yield compared to the bus bar 32, it is possible to reduce the member cost.

In the bus bar 61 connecting the positive electrode terminals of the cells 101 to 103 and the bus bar 67 connecting the negative electrode terminals of the cells 116 to 118, the deviation of current (joining of current) described with reference to FIG. 5 is unlikely to occur. Therefore, the width of the bus bar 61, 67 is uniform.

Next, a modification of the second example useful for understanding the invention will be described. Also in the configuration in which the cross-sectional area of the bus bar is adjusted by the width of the bus bar, it is possible to employ a divided bus bar as described in the first modification of the first embodiment.

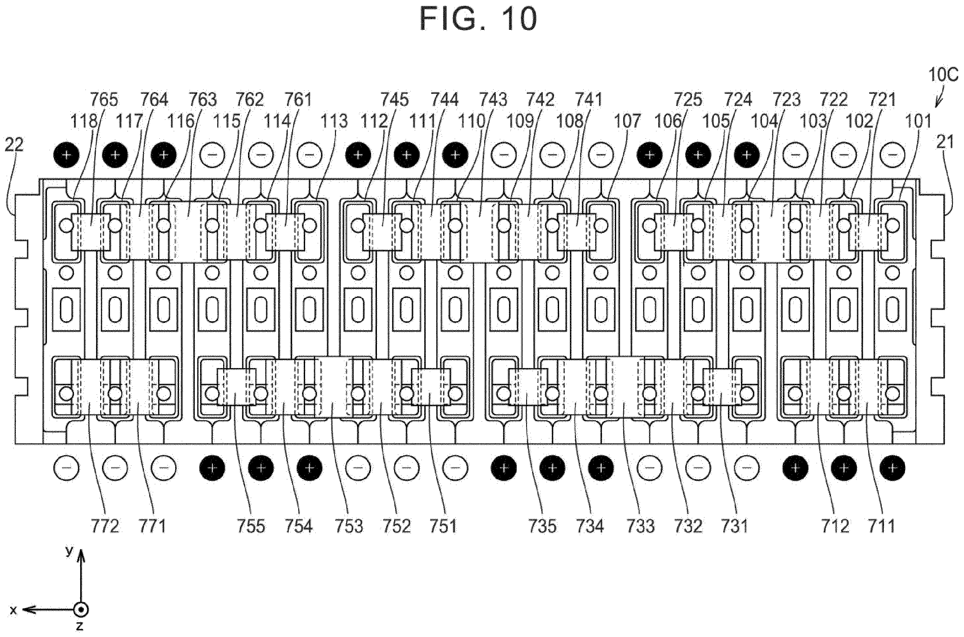

FIG. 10 is a diagram for explaining the configuration of bus bars 711 to 772 in the modification of the second example useful for understanding the invention. Referring to FIG. 10, a battery pack 10C differs from the battery pack 10B according to the second example useful for understanding the invention (see FIG. 9) in including the bus bars 711 to 772 instead of the bus bars 61 to 67.

The bus bar 721 couples the negative electrode terminal of the cell 101 and the negative electrode terminal of the cell 102 to each other. The bus bar 722 couples the negative electrode terminal of the cell 1 02 and the negative electrode terminal of the cell 1 03 to each other. The bus bar 723 couples the negative electrode terminal of the cell 103 and the positive electrode terminal of the cell 104 to each other. The bus bar 724 couples the positive electrode terminal of the cell 1 04 and the positive electrode terminal of the cell 1 05 to each other. The bus bar 725 couples the positive electrode terminal of the cell 105 and the positive electrode terminal of the cell 106 to each other.

Of the bus bars 721 to 725, the width of the bus bar 721, 725 is the smallest, while the width of the bus bar 723 is the greatest. The width of the bus bar 722, 724 is greater than the width of the bus bar 721, 725 and smaller than the width of the bus bar 723. Therefore, the bus bars 721, 725 (the bus bars 722, 724 may be included) respectively correspond to a "first region" and a "second region" according to the disclosure, and the bus bar 723 corresponds to an "intermediate region" according to the disclosure. Since the configuration of the other bus bars 731 to 765 is basically the same as the configuration of the bus bars 721 to 725, a detailed description will not be repeated.

According to the modification of the second example useful for understanding the invention, like in the second example useful for understanding the invention, heat loss due to charge/discharge of the battery pack 10C can be reduced while suppressing an increase in the weight of the battery pack 10C. By configuring the bus bars 711 to 772 as divided bus bars, it is possible to further suppress an increase in the weight of the battery pack 10C compared to the integrated bus bars as in the second example useful for understanding the invention.

The bus bar configuration described in the first example useful for understanding the invention, the first embodiment or its first modification) and the bus bar configuration described in the second example useful for understanding the invention (or its modification) can be combined together. For example, the configuration in which the cross-sectional area of the middle region in the stacking direction of the cells is the greatest, while the cross-sectional area decreases as approaching the end regions in the stacking direction, may be realized by changing both the thickness (length in the z-direction) and the width (length in the y-direction) of the bus bar.

The embodiments and examples useful for understanding the invention disclosed herein are for illustrative purposes only and should not be construed as being limitative in any aspect. The scope of the disclosure is defined by the claims, not by the description of the embodiments described above, and is intended to include all changes within the meaning of the claims.

A battery pack (10) includes a bus bar (32), a first module, and a second module. The bus bar (32) extends in a predetermined direction and includes a first region, a second region and an intermediate region. The first module includes a plurality of cells (101, 102, 103) each including a negative electrode terminal connected to the first region. The second module includes a plurality of cells (104, 105, 106) each including a positive electrode terminal connected to the second region. The negative electrode terminals are arranged in the predetermined direction in the first region. The positive electrode terminals are arranged in the predetermined direction in the second region. In a cross section perpendicular to the predetermined direction, a cross-sectional area of the intermediate region is greater than a cross-sectional area of at least a part of the first region and is greater than a cross-sectional area of at least a part of the second region.

## Claims

1. A battery pack, the battery pack including a bus bar (42; 511, 512, 521, 522, 523, 524, 525, 531, 532, 533, 534, 535, 541, 542, 543, 544, 545, 551, 552, 553, 554, 555, 561, 562, 563, 564, 565, 571, 572) provided so as to extend in a predetermined direction and including a first region, a second region and an intermediate region located between the first region and the second region, a first module including a plurality of cells each including a negative electrode terminal (85N) connected to the first region, and a second module including a plurality of cells each including a positive electrode terminal (85P) connected to the second region, wherein:
the negative electrode terminals (85N) of the plurality of cells included in the first module are arranged in the predetermined direction in the first region;
the positive electrode terminals (85P) of the plurality of cells included in the second module are arranged in the predetermined direction in the second region; and
in a cross section perpendicular to the predetermined direction, a cross-sectional area of the intermediate region is greater than a cross-sectional area of at least a part of the first region and is greater than a cross-sectional area of at least a part of the second region,
**characterized in that**
the bus bar (42; 52) includes a plurality of bus bar plates (421, 422, 423; 521, 522, 523, 524, 525) stacked in a direction of the cross section perpendicular to the predetermined direction; and
the number of the plurality of bus bar plates (421, 422, 423; 523) in the intermediate region is greater than the number of the plurality of bus bar plates (421, 422; 521, 522) in the first region and is greater than the number of the plurality of bus bar plates (421, 422; 524, 525) in the second region.

2. The battery pack according to claim 1, **characterized in that**, in the cross section perpendicular to the predetermined direction, the cross-sectional area of the intermediate region is the greatest of all cross-sectional areas of the bus bar.

3. The battery pack according to claim 1 or 2, **characterized in that** a thickness of the intermediate region is greater than a thickness of the first region and is greater than a thickness of the second region.

4. The battery pack according to claim 3, **characterized in that** further a width of the intermediate region is greater than a width of the first region and is greater than a width of the second region.

## Patentansprüche

1. Batteriepack, wobei der Batteriepack eine Stromschiene (42; 511, 512, 521, 522, 523, 524, 525, 531, 532, 533, 534, 535, 541, 542, 543, 544, 545, 551, 552, 553, 554, 555, 561, 562, 563, 564, 565, 571, 572), die bereitgestellt ist, um sich in einer vorbestimmten Richtung zu erstrecken, und die eine erste Region, eine zweite Region und eine Zwischenregion, die zwischen der ersten Region und der zweiten Region angeordnet ist, umfasst, ein erstes Modul, das eine Vielzahl von Zellen umfasst, von denen jede einen negativen Elektrodenanschluss (85N) umfasst, der mit der ersten Region verbunden ist, und ein zweites Modul umfasst, das eine Vielzahl von Zellen umfasst, von denen jede einen positiven Elektrodenanschluss (85P) umfasst, der mit der zweiten Region verbunden ist, wobei:
die negativen Elektrodenanschlüsse (85N) der Vielzahl von Zellen, die in dem ersten Modul beinhaltet sind, in der vorbestimmten Richtung in der ersten Region angeordnet sind;
die positiven Elektrodenanschlüsse (85P) der Vielzahl von Zellen, die in dem zweiten Modul beinhaltet sind, in der vorbestimmten Richtung in der zweiten Region angeordnet sind; und
in einem Querschnitt, der senkrecht zu der vorbestimmten Richtung ist, eine Querschnittsfläche der Zwischenregion größer als eine Querschnittsfläche zumindest eines Teils der ersten Region ist und größer als eine Querschnittsfläche zumindest eines Teils der zweiten Region ist,
**dadurch gekennzeichnet, dass**
die Stromschiene (42; 52) eine Vielzahl von Stromschienenplatten (421, 422, 423; 521, 522, 523, 524, 525) umfasst, die in einer Richtung des Querschnitts senkrecht zu der vorbestimmten Richtung gestapelt sind;
die Anzahl der Vielzahl von Stromschienenplatten (421, 422, 423; 523) in der Zwischenregion größer ist als die Anzahl der Vielzahl von Stromschienenplatten (421, 422; 521, 522) in der ersten Region und größer ist als die Anzahl der Vielzahl von Stromschienenplatten (421, 422; 524, 525) in der zweiten Region.

2. Batteriepack nach Anspruch 1, **dadurch gekennzeichnet, dass** in dem Querschnitt, der senkrecht zu der vorbestimmten Richtung ist, die Querschnittsfläche der Zwischenregion die größte aller Querschnittsflächen der Stromschiene ist.

3. Batteriepack nach Anspruch 1 oder 2, **dadurch gekennzeichnet, dass** eine Dicke der Zwischenregion größer ist als eine Dicke der ersten Region und größer ist als eine dicke der zweiten Region.

4. Batteriepack nach Anspruch 3, **dadurch gekennzeichnet, dass** ferner eine Breite der Zwischenregion größer ist als eine Breite der ersten Region und größer ist als eine Breite der zweiten Region.

## Revendications

1. Bloc-batterie, le bloc-batterie comprenant une barre omnibus (42 ; 511, 512, 521, 522, 523, 524, 525, 531, 532, 533, 534, 535, 541, 542, 543, 544, 545, 551, 552, 553, 554, 555, 561, 562, 563, 564, 565, 571, 572) prévue afin de s'étendre dans une direction prédéterminée et comprenant une première région, une seconde région et une région intermédiaire positionnée entre la première région et la seconde région, un premier module comprenant une pluralité d'éléments de batterie comprenant chacun une borne d'électrode négative (85N) raccordée à la première région, et un second module comprenant une pluralité d'éléments de batterie comprenant chacun une borne d'électrode positive (85P) raccordée à la seconde région, dans lequel :
les bornes d'électrode négative (85N) de la pluralité d'éléments de batterie comprises dans le premier module sont agencées dans la direction prédéterminée dans la première région ;
les bornes d'électrode positive (85P) de la pluralité d'éléments de batterie comprises dans le second module sont agencées dans la direction prédéterminée dans la seconde région ; et
dans une section transversale perpendiculaire à la région prédéterminée, une surface transversale de la région intermédiaire est supérieure à une surface transversale d'au moins une partie de la première région et est supérieure à une surface transversale d'au moins une partie de la seconde région,
**caractérisé en ce que** :
la barre omnibus (42 ; 52) comprend une pluralité de plaques de barre omnibus (421, 422, 423 ; 521, 522, 523, 524, 525) empilées dans une direction de la section transversale perpendiculaire à la direction prédéterminée ; et
le nombre de la pluralité de plaques de bar omnibus (421, 422, 423 ; 523) dans la région intermédiaire est supérieur au nombre de la pluralité de plaques de barre omnibus (421, 422 ; 521, 522) dans la première région et est supérieur au nombre de la pluralité de plaques de barre omnibus (421, 422 ; 524, 525) dans la seconde région.

2. Bloc-batterie selon la revendication 1, **caractérisé en ce que**, dans la section transversale perpendiculaire à la direction prédéterminée, la surface transversale de la région intermédiaire est la plus importante de toutes les surfaces transversales de la barre omnibus.

3. Bloc-batterie selon la revendication 1 ou 2, **caractérisé en ce qu'**une épaisseur de la région intermédiaire est supérieure à une épaisseur de la première région et est supérieure à une épaisseur de la seconde région.

4. Bloc-batterie selon la revendication 3, **caractérisé en ce qu'**en outre, une largeur de la région intermédiaire est supérieure à une largeur de la première région et est supérieure à une largeur de la seconde région.
